# EUROPÄISCHE PATENTSCHRIFT

(11) **EP 2 855 200 B1**
(45) Veröffentlichungstag und Bekanntmachung des Hinweises auf die Patenterteilung: **05.09.2018**
(21) Anmeldenummer: 13783830.6
(22) Anmeldetag: 27.05.2013
(51) Int. Cl.: B60N 3/06

(54) **FUSSSTÜTZE**
FOOTREST
REPOSE-PIEDS

(30) Priorität: 31.05.2012 CZ 20120362
(43) Veröffentlichungstag der Anmeldung: 08.04.2015
(73) Patentinhaber: Skoda Auto A.S., 293 60 Mladá Boleslav (CZ)
(72) Erfinder: LANGR, David, 517-02 Kvasiny (CZ)
(86) Internationale Anmeldenummer: PCT/CZ2013/000066
(87) Internationale Veröffentlichungsnummer: WO 2013/178197

(56) Entgegenhaltungen:
- WO-A1-2006/043737
- DE-A1- 19 952 022
- FR-A1- 2 880 597

## Beschreibung

### Bereich der Technik

Die Erfindung betrifft eine Fußstütze für den Einsatz in Verkehrsmitteln.

### Bisheriger Stand der Technik

Heute gibt es in Verkehrsmitteln keilförmige Fußstützen, die - meist mit Hilfe von Klettverschlüssen - am Fahrzeugboden bzw. an der Einlegematte befestigt werden und für besseren Komfort der Fahrzeuginsassen im Fußbereich sorgen sollen. Die Fußstützen finden vor allem bei längeren Strecken Anwendung.

Der Nachteil dieser Lösung liegt in der umständlichen Installation und der Notwendigkeit, die Fußstütze bei Bedarf manuell über die Unterlage zu verschieben, d. h. sich bücken zu müssen.

Weiter sind aus dem Stand der Technik keilförmige Fußstützen für den Einsatz in Verkehrsmitteln, die über Bedienelemente zur Längsverschiebung über die Unterlage verfügen, bekannt. Siehe die Dokumente DE 199 52 022 A1 und WO 2006/043737 A1.

Der Nachteil dieser Lösungen sind ihre ungenügenden Bedienfunktionen, Arretierungen und Stabilität, und unsichere Möglichkeit der Verschiebung in der Längsrichtung.

Nachteil der Lösung, die in dem Dokument FR 2 880 597 A1 beschrieben ist, ist ihre Schwierigkeit wegen der Notwendigkeit der verlängerten Schienen für den Sitz.

### Kern der Erfindung

Die vorliegende Erfindung bietet eine technische Lösung für die vorstehend angeführten Nachteile.

Die Fußstütze verfügt zusätzlich über eine Bedienfunktion, mit deren Hilfe die Fußstütze ganz einfach - mit dem Fuß - auf dem Boden längs zur Fahrtrichtung verschoben und - ebenfalls mit dem Fuß - über eine Arretiertaste mit einem Klettverschluss-Teleskopelement in beliebiger Position fixiert werden kann.

Im arretierten Zustand haftet das Klettverschluss-Teleskopelement an der Unterlage bzw. am Teppich. Im entarretierten Zustand ist der Klettverschluss geöffnet, die Entarretierung erfolgt über eine per Fuß bediente Klappe.

Bei der Entarretierung werden die Klettverschluss-Teleskopelemente in den Körper der Fußstütze "eingefahren", dadurch wird die Stütze entriegelt und kann auf dem Boden hin und her verschoben werden. Die gerade Verschiebung erfolgt über eine Rolle mit Zacken, bzw. mit Gummibeschichtung (z. B. Anti-Rutsch-Noppen). Die Arretierung der Stütze am Teppichboden erfolgt über eine Taste.

### Übersicht der Zeichnungen

Die Erfindung wird mit Hilfe der schematischen Zeichnungen näher erläutert; darin zeigt die Abb. 1 die axonometrische Draufsicht auf die Fußstütze im arretierten Zustand, die Abb. 2 die axonometrische Ansicht der Fußstütze von unten im arretierten Zustand, die Abb. 3 die axonometrische Draufsicht auf die Fußstütze im entarretierten Zustand und die Abb. 4 die axonometrische Ansicht der Fußtstütze von unten im entarretierten Zustand.

### Ausführungsbeispiele der Erfindung

Die Erfindung wird nachfolgend bildlich dargestellt.

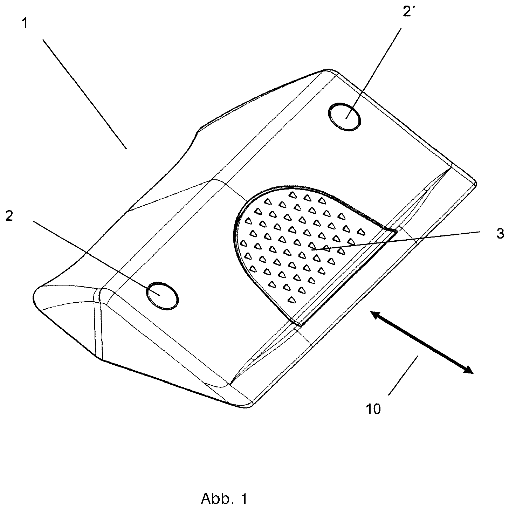

Die Abb. 1 zeigt die axonometrische Draufsicht auf die Fußstütze 1 im arretierten Zustand.

Die Fußstütze 1 hat eine Keilform. Auf der Fußablageseite befinden sich Bedienelemente zur Längsverschiebung der Stütze über eine Unterlage 10.

Die Bedienelemente bestehen mindestens aus einer Arretiertaste 2, 2' und einer. Steuerklappe 3. Die Bedienelemente sind für die Fußbedienung ausgelegt. Im arretierten Zustand, d. h., wenn die Fußstütze 1 mit der Unterlage (dem Teppich) verbunden ist, ist die Arretiertaste 2, 2' gedrückt.

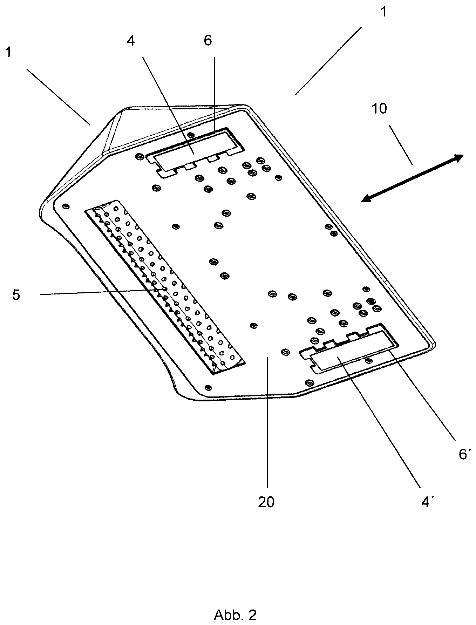

Die Abb. 2 zeigt die axonometrische Ansicht der Fußstütze von unten im arretierten Zustand. Die Fußstütze 1 ist auf der Unterseite 20 mit mindestens einem Teleskopelement 4, 4' mit Kletterverschluss und einer Führungsrolle 5 versehen. Das Teleskopelement 4, 4' ist auf der Unterseite 20 mit einem Klettverschluss - beziehungsweise einer Hakenschicht - versehen, um die Fußstütze 1 im arretierten Zustand gegen die Längsbewegung 10 über die Unterlage zu sichern, d. h. die Verbindung der Hakenschicht mit einem feinfasrigen Teppich zu bilden. Das Teleskopelement 4, 4 mit Klettverschluss wird durch die Öffnung 6, 6 geschoben.

Die Arretiertaste 2, 2, die Steuerklappe 3 und das Teleskopelement 4, 4 sind mechanisch und/oder elektrisch miteinander verbunden.

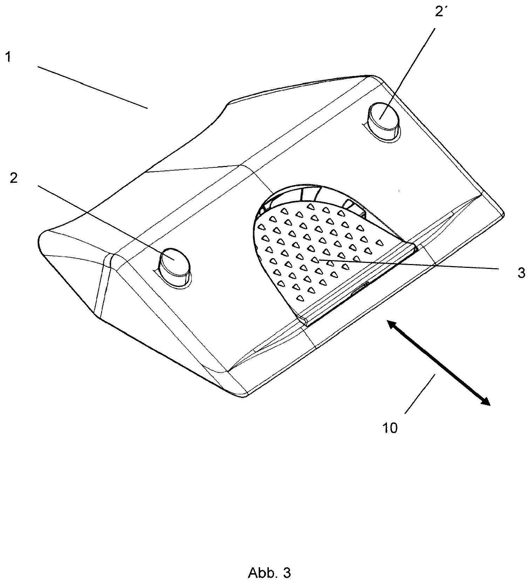

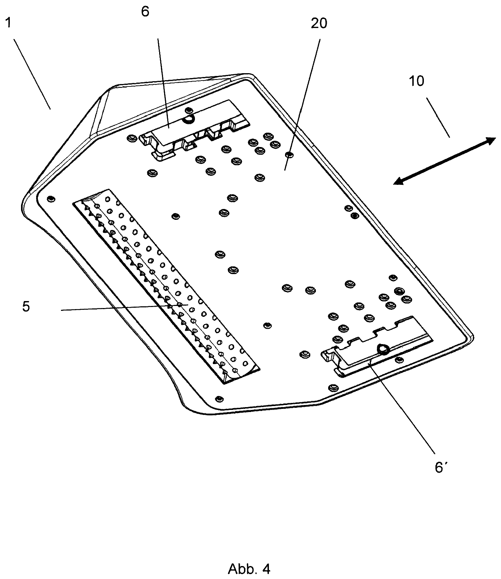

Die Abb. 3 und 4 zeigen die Fußstütze 1 im entarretierten Zustand. In dieser Position wird die Steuerklappe 3 per Fuß gedrückt, dadurch wird die Arretiertaste 2, 2' entsperrt und gleichzeitig das Klettverschluss-Teleskopelement 4, 4 in den Körper der Fußstütze 1 eingefahren.

In diesem entarretierten Zustand kann die Fußstütze 1 mit einem oder beiden Füßen in Längsrichtung 10 verschoben werden. Diese Funktion eignet sich zur Verstellung der Fußstütze 1 bei verschiedenen Körpergrößen und Beinlängen der Beifahrer, um die Position der Fußstütze 1 den individuellen Körperparametern anzupassen und den erwünschten Reiesekomfort zu erreichen.

Die Führungsrolle 5 ist mit Zacken versehen oder verfügt über eine Gummibeschichtung mit Anti-Rutsch-Noppen.

## Patentansprüche

1. Keilförmige Fußstütze (1) für den Einsatz in Verkehrsmitteln, die über Bedienelemente zur Längsverschiebung (10) über eine Unterlage verfügt, **dadurch gekennzeichnet, daß** sie auf der Unterseite (20) mit mindestens einem Teleskopelement (4, 4') mit einem Klettverschluss beziehungsweise einer Hakenschicht und einer Führungsrolle (5) versehen ist.

2. Fußstütze (1) nach Anspruch 1, **dadurch gekennzeichnet, dass** die Bedienelemente aus mindestens einer Arretiertaste (2, 2') und einer Steuerklappe (3) bestehen und mit dem Teleskopelement (4, 4') mechanisch und/oder elektrisch miteinander verbunden sind.

3. Fußstütze (1) nach Anspruch 1, **dadurch gekennzeichnet, dass** die Führungsrolle (5) mit Zacken versehen ist.

4. Fußstütze (1), nach Anspruch 1, **dadurch gekennzeichnet, dass** die Führungsrolle (5) über eine Gummibeschichtung mit Anti-Rutsch-Noppen verfügt.

## Claims

1. A wedge-shaped footrest (1) for use in means of transport, which has operating elements for the longitudinal displacement (10) over an underlying surface, **characterized in that** it is provided on the underside (20) with at least one telescopic element (4, 4') with a hook and loop fastener or a layer of hooks and a guide roller (5).

2. A footrest (1) according to Claim 1, **characterized in that** the operating elements consist of at least a locking button (2, 2') and a control flap (3) and are connected with each other mechanically and/or electrically with the telescopic element (4, 4')

3. A footrest (1) according to Claim 1, **characterized in that** the guide roller (5) is provided with prongs.

4. A footrest (1) according to Claim 1, **characterized in that** the guide roller (5) has a rubber coating with anti-slip nubs.

## Revendications

1. Repose-pied cunéiforme (1) destiné à être utilisé dans des moyens de transport, qui est muni d'éléments de commande pour le coulissement longitudinal (10) sur un support, **caractérisé en ce qu'**il est muni, sur le côté inférieur (20) d'au moins un élément télescopique (4, 4'), d'une fermeture Velcro ou d'une couche à crochets et d'un rouleau de guidage (5).

2. Repose-pied (1) selon la revendication 1, **caractérisé en ce que** les éléments de commande sont constitués d'au moins une touche de blocage (2, 2') et d'un clapet de commande (3) et sont reliés entre eux mécaniquement et/ou électriquement avec l'élément télescopique (4, 4').

3. Repose-pied (1) selon la revendication 1, **caractérisé en ce que** le rouleau de guidage (5) est muni de fourchons.

4. Repose-pied (1) selon la revendication 1, **caractérisé en ce que** le rouleau de guidage (5) est muni d'un revêtement de caoutchouc avec des tétons antidérapants.
